# EUROPÄISCHE PATENTSCHRIFT

(11) **EP 1 284 880 B1**
(45) Veröffentlichungstag und Bekanntmachung des Hinweises auf die Patenterteilung: **14.12.2005**
(21) Anmeldenummer: 01956438.4
(22) Anmeldetag: 17.05.2001
(51) Int. Cl.: B60J 10/00

(54) **DICHTUNG FÜR EIN SCHLIESSTEIL EINES KRAFTFAHRZEUGES**
SEAL FOR A CLOSING PART OF A MOTOR VEHICLE
ELEMENT D'ETANCHEITE DESTINE A UNE PIECE DE FERMETURE D'UN VEHICULE AUTOMOBILE

(30) Priorität: 23.05.2000 DE 10025326
(43) Veröffentlichungstag der Anmeldung: 26.02.2003
(73) Patentinhaber: Metzeler Automotive Profile Systems GmbH, 88131 Lindau/Bodensee (DE)
(72) Erfinder: PALICKI, Dirk, 88138 Hergensweiler (DE); MAYERL, Helmut, 86706 Lichtenau (DE); SCHNEEMILCH, Uwe, 86564 Brunnen (DE)
(74) Vertreter: Preissner, Nicolaus
(86) Internationale Anmeldenummer: PCT/EP2001/005679
(87) Internationale Veröffentlichungsnummer: WO 2001/089870

(56) Entgegenhaltungen:
- EP-A- 0 245 594
- WO-A-98/31557
- DE-A- 3 912 897
- FR-A- 2 642 809

## Beschreibung

Die vorliegende Erfindung betrifft eine Dichtungsanordnung, insbesondere für ein Schliessteil eines Kraftfahrzeugs.

Dichtungsanordnungen sind in einer Vielzahl von Ausgestaltungen bekannt. Nachteilig hierbei ist, dass in manchen Fällen zur Befestigung und Fixierung eine Schraube erforderlich ist. Diese Befestigung ist aufwendig und erfordert zusätzliche Montageschritte. Zudem ist die Schraube im Regelfall von einer Seite her sichtbar.

Eine Dichtungsanordnung, die eine mit einem Verrastelement versehene Dichtung aufweist, wird in der WO 98/31557 beschrieben. Das Verrastelement ist mit einer elastisch schwenkbaren Zunge versehen, die dazu dient, die Dichtung an einem Rahmen eines Schliessteils zu befestigen.

Aufgabe der vorliegenden Erfindung ist es, eine Dichtungsanordnung bereitzustellen, die schneller und einfacher befestigt werden kann und ohne Werkzeuge demontierbar ist.

Erfindungsgemäss wird diese Aufgabe in Übereinstimmung mit Anspruch 1 dadurch **gelöst**, dass die Dichtungsanordnung mit einem Rahmen, der eine Ausnehmung und wenigstens einen Vorsprung aufweist, und einer Dichtung, die ein in der Ausnehmung angeordnetes Verrastelement aufweist, versehen ist. Der Vorsprung bildet eine Hinterschneidung in der Ausnehmung. Das Verrastelement ist mit einem starren Grundkörper und wenigstens einer elastisch schwenkbaren Zunge, die den Vorsprung hintergreift, versehen.

Die erfindungsgemäss vorgesehene Zunge ermöglicht eine Befestigung der Dichtung ohne Werkzeug und ohne zusätzliche Montageschritte. Die bisher verwendete Schraube kann vollständig entfallen. Es ergibt sich somit eine rasche und einfache Montage und Demontage. Weiterhin wird eine glatte durchgehende Oberfläche an der Aussenseite und der Innenseite von beispielsweise einer Tür erreicht. Das Verrastelement wird zweckmässigerweise getrennt von der Dichtung aus einem geeigneten Material hergestellt und anschliessend mit dieser verbunden. Auf Grund der getrennten Herstellung kann eine optimale Materialanpassung erfolgen. Das Verrastelement weist einen Grundkörper auf, an dem die mindestens eine Zunge elastisch verschwenkbar angelenkt ist. Der Grundkörper und die Zunge sind zueinander elastisch verschwenkbar.

Vorteilhafte Ausgestaltungen und Weiterbildungen der Erfindung gehen aus den Ansprüchen 2 bis 12 hervor.

In vorteilhafter Weiterbildung weist das Verrastelement eine Ausnehmung auf, die eine sichere Verbindung zwischen dem Verrastelement und der Dichtung bereitstellt. Gleichzeitig ist die erforderliche Verschwenkbarkeit der Zunge gegeben.

Gemäss einer vorteilhaften Ausgestaltung sind der Grundkörper und die mindestens eine Zunge materialeinstückig ausgebildet. Das Verrastelement kann somit einteilig hergestellt und mit der Dichtung verbunden werden.

Vorteilhaft ist die Dichtung als Rahmendichtung für eine bewegliche Scheibe einer Tür eines Kraftfahrzeugs ausgebildet. Das Verrastelement kann insbesondere im Bereich der B-Säule des Kraftfahrzeugs angeordnet werden. Die erfindungsgemässe Dichtungsanordnung kann allerdings auch als Schachtdichtung für eine bewegliche Scheibe oder ein anderes Schliessteil, beispielsweise eine Tür oder eine Motor- oder Kofferraumhaube, ausgebildet werden.

Nach einer vorteilhaften Ausgestaltung ist das Verrastelement mit zwei elastisch verschwenkbaren Zungen versehen. Die Verwendung von zwei Zungen führt zu einer verbesserten Befestigung und Fixierung.

Gemäss einer vorteilhaften Weiterbildung sind die beiden Zungen winklig zueinander angeordnet. Auf Grund der Winkelstellung erfolgt eine Fixierung des Verrastelements in zwei Richtungen und damit eine Fixierung in der gewünschten Befestigungsebene. Ein Verschieben des Verrastelements und damit der Dichtung wird ausgeschlossen.

In vorteilhafter Ausgestaltung entspricht der Winkel zwischen den beiden Zungen dem Winkel zwischen Rahmenteilen, an denen das Verrastelement befestigt wird. Hierdurch ergibt sich eine sichere Befestigung bei einfacher Montage.

Vorteilhaft ist die mindestens eine Zunge mit einem Ansatz zur Anlage an dem zugeordneten Vorsprung versehen. Dieser Ansatz führt zu einer definierten Befestigungsposition der Zunge. Ein unzulässig grosses Verschwenken der Zunge wird verhindert. Zudem kann die Zunge in der Befestigungsposition noch elastisch vorgespannt sein. Die Dichtung wird dann nach der Montage von der Vorspannung gegen die Tür gezogen. Auch bei einem allmählichen Abbau der Vorspannung während der Lebensdauer der Dichtung ist eine sichere, zuverlässige Befestigung gewährleistet.

Das Verrastelement kann aus Metall oder Hartkunststoff bestehen. Diese Materialien stellen bei geringem Gewicht die erforderliche Elastizität und Steifigkeit bereit.

Nachstehend wird die Erfindung anhand eines Ausführungsbeispiels näher erläutert, das in schematischer Weise in den Zeichnungen dargestellt ist. In diesem Ausführungsbeispiel wird der Gegenstand der Erfindung anhand einer Fensterdichtung erläutert, ohne auf diesen Anwendungsfall eingeschränkt zu sein. Dabei zeigt:
- Figur 1: eine Seitenansicht einer Tür eines Kraftfahrzeugs;
- Figur 2: eine vergrösserte Darstellung der Einzelheit X aus Figur 1;
- Figur 3: eine perspektivische Darstellung eines in einen Türrahmen eingesetzten Verrastelements gemäss Pfeilrichtung III in Figur 2 und
- Figur 4: eine Draufsicht auf Figur 3.

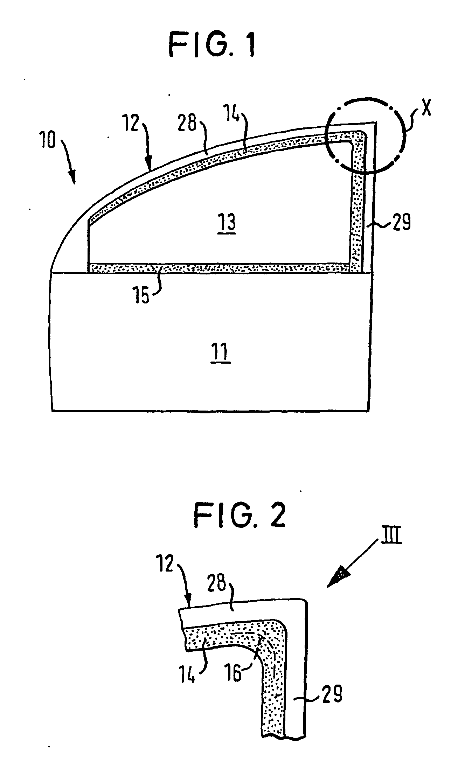

Figur 1 zeigt eine Seitenansicht einer Tür 10 eines Kraftfahrzeugs mit einem Türblech 11 und einem Rahmen 12. Der Rahmen 12 weist zwei Rahmenteile 28, 29 auf. Zwischen dem Türblech 11 und dem Rahmen 12 ist eine bewegliche Scheibe 13 aufgenommen. Zum Führen und Dichten der Scheibe 13 dienen eine Rahmendichtung 14 sowie eine Schachtdichtung 15.

Figur 2 zeigt eine vergrösserte Darstellung der Einzelheit X aus Figur 1 im Bereich der B-Säule. Die Rahmendichtung 14 ist in der Ecke zwischen den Rahmenteilen 28, 29 mit einem Verrastelement 16 versehen. Das Verrastelement 16 stellt eine sichere und zuverlässige Befestigung der Rahmendichtung 14 im Übergangsbereich zwischen den Rahmenteilen 28, 29 bereit.

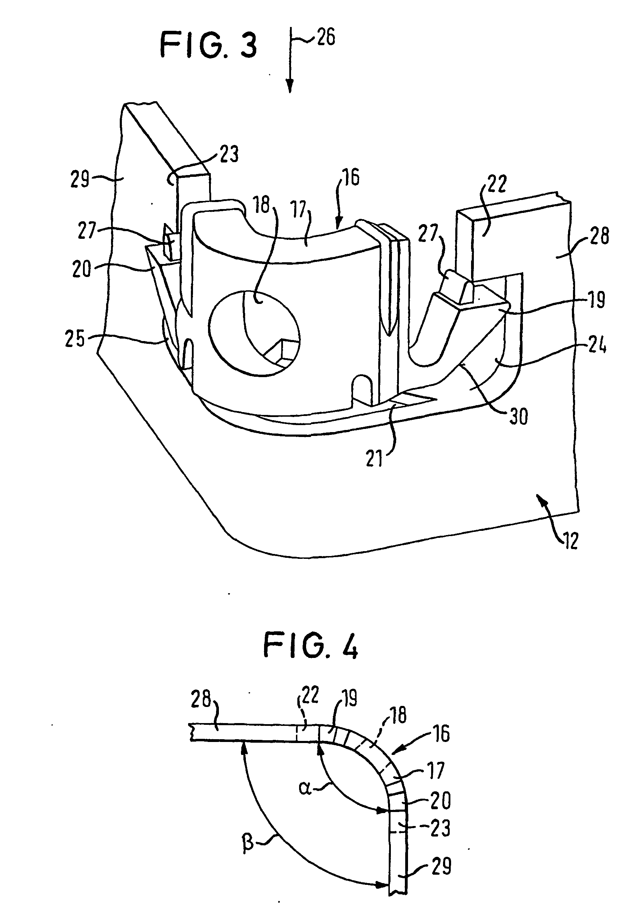

Die Figuren 3 und 4 zeigen Einzelheiten des Verrastelements 16. Das Verrastelement 16 weist einen Grundkörper 17 mit einer Ausnehmung 18 sowie zwei Zungen 19, 20 auf. Der Grundkörper 17 und die Zungen 19, 20 sind materialeinstückig ausgebildet. Die Zungen 19, 20 sind hierbei elastisch verschwenkbar an dem Grundkörper 17 angelenkt. Jede der Zungen 19, 20 ist mit einem Ansatz 27 versehen. Der Grundkörper 17 und die Zungen 19, 20 sind hierbei starr ausgebildet und zueinander elastisch verschwenkbar.

Der Rahmen 12 der Tür 10 weist im Übergangsbereich zwischen den Rahmenteilen 28, 29 eine Ausnehmung 21 auf. Die Ausnehmung 21 ist gross genug, um das Verrastelement 16 aufzunehmen. Zur Fixierung der Zungen 19, 20 sind die Rahmenteile 28, 29 mit Vorsprüngen 22, 23 versehen. Die Vorsprünge 22, 23 bilden Hinterschneidungen 24, 25, die zur Aufnahme der Zungen 19, 20 dienen.

Zur Montage wird die Rahmendichtung 14 zusammen mit dem Verrastelement 16 gemäss Pfeilrichtung 26 in die Ausnehmung 21 eingeführt. Die Zungen 19, 20 kommen hierbei in Kontakt mit den Vorsprüngen 22, 23 und werden zum Grundkörper 17 hin verschwenkt. Zum Unterstützen der Verschwenkbewegung weisen die Zungen 19, 20 eine Schrägfläche 30 auf.

Bei einer weiteren Bewegung in Pfeilrichtung 26 gelangen die Zungen 19, 20 in die Hinterschneidungen 24, 25. Sie schwenken dann elastisch vom Grundkörper 17 weg, bis die Ansätze 27 in Kontakt mit den Vorsprüngen 22, 23 kommen. Auf diese Weise wird eine definierte Montageposition der Zungen 19, 20 sichergestellt. Die Zungen 19, 20 können insbesondere in der Montageposition noch vorgespannt sein.

Die Ausnehmung 18 des Grundkörpers 17 verringert das Gewicht des Verrastelements 16. Zudem wird die Ausnehmung 18 bei der Herstellung der Rahmendichtung 14 vom Material der Rahmendichtung 14 ausgefüllt. Hierdurch wird das Verriegelungselement 16 zuverlässig gegenüber der Rahmendichtung 14 fixiert.

Die Zungen 19, 20 des Verrastelements 16 sind winklig zueinander angeordnet. Der Winkel α zwischen den Zungen 19, 20 entspricht einem Winkel β zwischen den Rahmenteilen 28, 29. Die winklige Anordnung sorgt für eine verbesserte Befestigung und Fixierung. Ein Verschieben des Verrastelements 16 wird zuverlässig ausgeschlossen. Durch die im wesentlichen gleichen Winkel α, β wird sichergestellt, dass die Zungen 19, 20 zuverlässig in den Hinterschneidungen 24, 25 aufgenommen sind.

Das Verrastelement 16 besteht aus Metall, vorzugsweise einem Leichtmetall, oder Hartkunststoff. Es wird unabhängig von der Rahmendichtung 14 hergestellt und mit dieser verbunden. Hierdurch kann eine optimale Anpassung an die jeweiligen Randbedingungen erfolgen.

Die erfindungsgemässe Dichtung 14 kann schnell und einfach befestigt werden. Separate Befestigungselemente, wie beispielsweise Schrauben, sind nicht erforderlich. Es kann daher auf zusätzliche Montageschritte verzichtet werden.

## Patentansprüche

1. Dichtungsanordnung, insbesondere für ein Schliessteil (10; 13) eines Kraftfahrzeugs, mit einem Rahmen (12), der eine Ausnehmung (21) und wenigstens einen Vorsprung (22; 23) aufweist, und einer Dichtung (14), die ein in der Ausnehmung (21) angeordnetes Verrastelement (16) aufweist, wobei der Vorsprung (22, 23) eine Hinterschneidung (24, 25) in der Ausnehmung (21) bildet und wobei das Verrastelement (16) mit einem starren Grundkörper (17) und wenigstens einer elastisch schwenkbaren Zunge (19; 20), die den Vorsprung (22, 23) hintergreift, versehen ist.

2. Dichtungsanordnung nach Anspruch 1, **dadurch gekennzeichnet, dass** der Grundkörper (17) mit einer Ausnehmung (18) versehen ist.

3. Dichtungsanordnung nach Anspruch 1 oder 2, **dadurch gekennzeichnet, dass** der Grundkörper (17) und die Zunge (19; 20) materialeinstückig ausgebildet sind.

4. Dichtungsanordnung nach einem der Ansprüche 1 bis 3, **dadurch gekennzeichnet, dass** der Grundkörper (17) und die Zunge (19; 20) zueinander schwenkbar sind.

5. Dichtungsanordnung nach einem der Ansprüche 1 bis 4, **dadurch gekennzeichnet, dass** die Dichtung als Rahmendichtung (14) für eine bewegliche Scheibe (13) einer Tür (10) eines Kraftfahrzeugs ausgebildet ist.

6. Dichtungsanordnung nach einem der Ansprüche 1 bis 5, **dadurch gekennzeichnet, dass** der Rahmen (12) ein erstes Rahmenteil (28) und ein zweites Rahmenteil (29) aufweist, wobei die Ausnehmung (21) in einem Übergangsbereich zwischen dem ersten Rahmenteil (28) und dem zweiten Rahmenteil (29) angeordnet ist.

7. Dichtungsanordnung nach Anspruch 6, **dadurch gekennzeichnet, dass** das erste Rahmenteil (28) und das zweite Rahmenteil (29) winklig zueinander angeordnet sind.

8. Dichtungsanordnung nach einem der Ansprüche 1 bis 7, **dadurch gekennzeichnet, dass** das Verrastelement (16) mit zwei elastisch schwenkbaren Zungen (19, 20) versehen ist.

9. Dichtungsanordnung nach Anspruch 8, **dadurch gekennzeichnet, dass** die beiden Zungen (19, 20) winklig zueinander angeordnet sind.

10. Dichtungsanordnung nach Anspruch 9, **dadurch gekennzeichnet, dass** der Winkel (α) zwischen den beiden Zungen (19, 20) dem Winkel (β) zwischen dem ersten Rahmenteil (28) und dem zweiten Rahmenteil (29) entspricht.

11. Dichtungsanordnung nach einem der Ansprüche 1 bis 10, **dadurch gekennzeichnet, dass** die Zunge (19; 20) mit einem Ansatz (27) versehen ist, der an dem Vorsprung (22; 23) anliegt.

12. Dichtungsanordnung nach einem der Ansprüche 1 bis 11, **dadurch gekennzeichnet, dass** das Verrastelement (16) aus Metall oder-Hartkunststoff besteht.

## Claims

1. A sealing arrangement, particularly for a closure part (10; 13) of a vehicle, having a frame (12) comprising a cavity (21) and at least one protuberance (22; 23), and a seal (14), comprising a latching element (16) arranged in the cavity (21), wherein the protuberance (22; 23) forms an undercut (24, 25) in the cavity (21) and wherein the latching element (16) is provided with a rigid base body (17) and at least one tongue (19; 20) configured elastically pivotable to clasp the protuberance (22; 23).

2. The sealing arrangement as set forth in claim 1, **characterized in that** the base body (17) is provided with a cavity (18).

3. The sealing arrangement as set forth in claim 1 or 2, **characterized in that** the base body (17) and the tongue (19; 20) are configured materially integral.

4. The sealing arrangement as set forth in any of the claims 1 to 3, **characterized in that** base body (17) and the tongue (19, 20) are configured pivotable to each other.

5. The sealing arrangement as set forth in any of the claims 1 to 4, **characterized in that** the seal is configured as a frame seal (14) for a moveable window pane (13) of a vehicle door (10).

6. The sealing arrangement as set forth in any of the claims 1 to 5, **characterized in that** the frame (12) comprises a first frame part (28) and a second frame part (29), wherein the cavity (21) is arranged in the transition area between the first frame part (28) and the second frame part (29).

7. The sealing arrangement as set forth in claim 6, **characterized in that** the first frame part (28) and the second frame part (29) are disposed at an angle to each other.

8. The sealing arrangement as set forth in any of the claims 1 to 7, **characterized in that** the latching element (16) is provided with two elastically pivotable tongues (19, 20).

9. The sealing arrangement as set forth in claim 8, **characterized in that** the two tongues (19, 20) are disposed at an angle to each other.

10. The sealing arrangement as set forth in claim 9, **characterized in that** the angle (α) between the two tongues (19, 20) corresponds to the angle (β) between the first frame part (28) and the second frame part (29).

11. The sealing arrangement as set forth in any of the claims 1 to 10, **characterized in that** the tongue (19; 20) is provided with an attachment (27) for contacting the protuberance (22; 23).

12. The sealing arrangement as set forth in any of the claims 1 to 11, **characterized in that** the latching element (16) is made of metal or of a hard plastics material.

## Revendications

1. Agencement d'étanchéité, en particulier pour un élément ouvrant (10 ; 13) d'un véhicule automobile, comportant un cadre (12) qui présente un évidement (21) et au moins une saillie (22 ; 23), et comportant un joint d'étanchéité (14) qui comprend un élément d'enclenchement (16) agencé dans l'évidement (21), la saillie (22, 23) formant une contre-dépouille (24, 25) dans l'évidement (21) et l'élément d'enclenchement (16) étant pourvu d'un corps de base rigide (17) et d'au moins une languette (19 ; 20) pivotant élastiquement et engageant par l'arrière la saillie (22, 23).

2. Agencement d'étanchéité selon la revendication 1, **caractérisé en ce que** le corps de base (17) est pourvu d'un évidement (18).

3. Agencement d'étanchéité selon l'une ou l'autre des revendications 1 et 2, **caractérisé en ce que** le corps de base (17) et la languette (19 ; 20) sont réalisés d'un seul tenant.

4. Agencement d'étanchéité selon l'une des revendications 1 à 3, **caractérisé en ce que** le corps de base (17) et la languette (19 ; 20) sont mobiles en pivotement l'un par rapport à l'autre.

5. Agencement d'étanchéité selon l'une des revendications 1 à 4, **caractérisé en ce que** le joint d'étanchéité est réalisé sous forme de joint d'encadrement (14) pour une vitre mobile (13) d'une porte (10) d'un véhicule automobile.

6. Agencement d'étanchéité selon l'une des revendications 1 à 5, **caractérisé en ce que** le cadre (12) comprend une première partie de cadre (28) et une seconde partie de cadre (29), l'évidement (21) étant ménagé dans une zone de transition entre la première partie de cadre (28) et la seconde partie de cadre (29).

7. Agencement d'étanchéité selon la revendication 6, **caractérisé en ce que** la première partie de cadre (28) et la seconde partie de cadre (29) sont agencées sous un angle l'une par rapport à l'autre.

8. Agencement d'étanchéité selon l'une des revendications 1 à 7, **caractérisé en ce que** l'élément d'enclenchement (16) est pourvu de deux languettes (19, 20) pivotant élastiquement.

9. Agencement d'étanchéité selon la revendication 8, **caractérisé en ce que** les deux languettes (19, 20) sont agencées sous un angle l'une par rapport à l'autre.

10. Agencement d'étanchéité selon la revendication 9, **caractérisé en ce que** l'angle (α) entre les deux languettes (19, 20) correspond à l'angle (β) entre la première partie de cadre (28) et la seconde partie de cadre (29).

11. Agencement d'étanchéité selon l'un des revendications 1 à 10, **caractérisé en ce que** la languette (19 ; 20) est pourvue d'un talon (27) qui s'applique contre la saillie (22 ; 23).

12. Agencement d'étanchéité selon l'une des revendications 1 à 11, **caractérisé en ce que** l'élément d'enclenchement (16) est constitué de métal ou de matière plastique dure.
